(19) Europäisches Patentamt
European Patent Office
Office européen des brevets

(11) **EP 4 379 339 B1**

(12) **EUROPEAN PATENT SPECIFICATION**

(45) Date of publication and mention
of the grant of the patent:
**25.02.2026 Bulletin 2026/09**

(21) Application number: **22911611.6**

(22) Date of filing: **09.11.2022**

(51) International Patent Classification (IPC):
**G01L 25/00** (2006.01)   **G01L 1/20** (2006.01)
**G01L 5/00** (2006.01)   **H01M 10/42** (2006.01)
**G01L 1/08** (2006.01)

(52) Cooperative Patent Classification (CPC):
**G01L 25/00; G01L 1/08; G01L 1/205; G01L 5/0038;**
**G01L 5/0066; H01M 10/4285; H01M 10/482;**
**H01M 50/105;** H01M 2200/20

(86) International application number:
**PCT/KR2022/017588**

(87) International publication number:
**WO 2023/120973 (29.06.2023 Gazette 2023/26)**

(54) **DEVICE FOR PRESSURIZING PRESSURE PAD SENSOR AND METHOD FOR CALIBRATING OUTPUT VALUE OF PRESSURE PAD SENSOR**

VORRICHTUNG ZUR DRUCKBEAUFSCHLAGUNG EINES DRUCKKISSENSENSORS UND VERFAHREN ZUR KALIBRIERUNG DES AUSGABEWERTS EINES DRUCKKISSENSENSORS

DISPOSITIF DE MISE SOUS PRESSION DE CAPTEUR DE PRESSION ET PROCÉDÉ D'ÉTALONNAGE DE VALEUR DE SORTIE DE CAPTEUR DE PRESSION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **20.12.2021 KR 20210183108**

(43) Date of publication of application:
**05.06.2024 Bulletin 2024/23**

(73) Proprietor: **LG Energy Solution, Ltd.**
**Seoul 07335 (KR)**

(72) Inventors:
• **LEE, Ki-Young**
**Daejeon 34122 (KR)**
• **KIM, Dong-Wook**
**Daejeon 34122 (KR)**
• **KIM, Do-Yul**
**Daejeon 34122 (KR)**

(74) Representative: **Plasseraud IP**
**104 Rue de Richelieu**
**CS92104**
**75080 Paris Cedex 02 (FR)**

(56) References cited:
CN-A- 101 281 073   CN-A- 113 358 275
CN-B- 102 879 150   JP-A- H0 979 931
JP-A- H0 979 931   JP-A- H0 979 932
KR-A- 20200 021 015   KR-A- 20210 150 215
KR-B1- 100 817 843

## Description

TECHNICAL FIELD

The present disclosure relates to a pressing device for calibrating an output value of a pressure pad sensor used for measuring swelling pressure of a battery cell to a reliable pressure value, a calibration method, and a measurement method of a battery cell surface pressure based on the calibration method.

The present application claims priority to Korean Patent Application No. 10-2021-0183108 filed on December 20, 2021 in the Republic of Korea.

BACKGROUND ART

Since a lithium-polymer pouch-type secondary battery is generally provided in the form in which an electrode assembly is embedded with an aluminum laminate sheet, it has the advantage of high energy density compared to its small size and weight, but has the disadvantage of weak mechanical rigidity. In particular, in the case of a lithium-polymer pouch-type secondary battery, an electrode becomes thick in the process of repeated charge/discharge, or a swelling phenomenon in which a pouch case swells due to gas generated by decomposition of an internal electrolyte as a side reaction occurs.

Therefore, for example, when a battery module is manufactured using pouch-type secondary batteries, it is necessary to measure the swelling pressure of the pouch-type secondary batteries generated at the time of a charge/discharge test for the pouch-type secondary batteries in the initial design stage and to determine the mechanical strength of a module case or the like based on the result.

However, in the prior art, there is no proper technology for measuring the surface pressure of a pouch-type secondary battery, and thus for example, a jig including a load cell was used, as disclosed in Korean Patent Publication No. 10-2021-0055363 A. It is difficult to use the jig including the load cell because it is expensive and bulky.

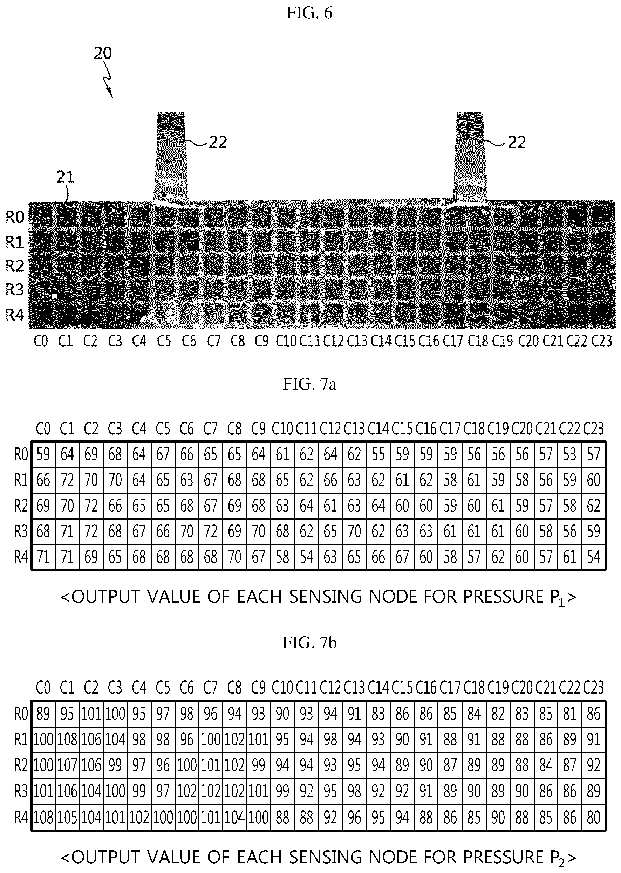

Accordingly, the present applicant devised a pressure pad sensor (refer to FIG. 6). The pressure pad sensor has a size corresponding to one surface of a pouch-type secondary battery, is in the form of a sheet, and includes a plurality of pressure measurement sensing nodes therein. Each sensing node may be composed of a force sensitive resistor (FSR) sensor using a property that a resistance value is changed according to physical force, weight, and the like. According to the pressure pad sensor, when a pouch-type secondary battery swells, it is possible to measure the surface pressure of each region of the pouch-type secondary battery.

Meanwhile, each sensing node of the pressure pad sensor outputs a resistance as a numerical value (0 to 255) called ADC obtained by converting the resistance into a digital value. It means that the higher the value, the higher the pressure. However, it is difficult to manufacture all sensing nodes constituting the pressure pad sensor to have exactly the same performance. That is, due to errors in manufacturing or assembling the sensing node, all sensing nodes distributed in the pressure pad sensor do not have the same value for the same force.

Therefore, in order to more accurately measure the swelling pressure distribution of the secondary battery using the pressure pad sensor, there is a need to calibrate the output values of the plurality of sensing nodes.

An example of a mechanical sensor array calibration device can be found in CN 101281073 A.

DISCLOSURE

Technical Problem

The present disclosure is designed to solve the problems of the related art, and therefore the present disclosure is directed to providing a pressing device specialized for pressing each sensing node of the pressure pad sensor while changing the pressure, a method for calibrating an output value of the pressure pad sensor, and a method for measuring surface pressure of a battery cell based on the calibration method using the pressure pad sensor in order to convert the output value of each sensing node of the pressure pad sensor into a reliable pressure value.

However, technical problems to be solved by the present disclosure are not limited to the above-described problems, and other problems not mentioned herein may be clearly understood by those skilled in the art from the following description of the present disclosure.

Technical Solution

According to the present disclosure, there is provided a pressure pad sensor pressing device, according to appended claim 1.

The node pressing portion may be configured to have a bottom surface corresponding to one of the sensing nodes.

The support frame may include a pair of leg plates spaced apart from each other in parallel in the second direction and disposed upright; and a support board extending in the second direction and connected to an upper end of the pair of leg plates, wherein the support board may have a long hole configured such that the node pressing portion extends downward from the top of the support board and is movable in the second direction.

The node pressing portion may include a pressing block extending to the lower portion of the support board through the long hole; and a flange block connected to the pressing block, having a larger width than the long hole and disposed on top of the support board.

The weight loading portion may be connected to the flange block being spaced apart at a predetermined interval by at least one connecting rod extending vertically upward from the flange block.

The weight loading portion may include a tray coupled to an upper end of the connecting rod; and one or more weights provided to be seated on the tray.

The first driving unit may include a first guide rail extending along the first direction; a first slide block coupled to the lower portion of each of the leg plates and slide-movably connected on the first guide rail; a shaft connection block coupled to one side of the leg plate; a first driving shaft extending in the first direction through the shaft connection block and connected to the shaft connection block so that the shaft connection block moves in the first direction or in the reverse direction when rotated in the forward and reverse direction; and a first drive motor for rotating the first driving shaft in the forward and reverse direction.

The second driving unit may include a second guide rail extending along the second direction on the support board; a second slide block slide-movably connected on the second guide rail; a shaft connection frame surrounding the connecting rod and coupled on the second slide block; a second driving shaft extending in the second direction through the shaft connection frame and connected to the shaft connection frame so that the shaft connection frame moves in the second direction or in the reverse direction when rotated in the forward and reverse direction; and a second drive motor for rotating the second driving shaft in the forward and reverse direction.

The third driving unit may include a piston rod extending in the vertical direction; a lever member having one end coupled to the weight loading portion and the other end coupled to the piston rod, and configured to lift and lower the weight loading portion through a seesaw operation by the action of the piston rod; and a third drive motor for moving the piston rod in the vertical direction.

The pressure pad sensor pressing device may further include a system unit for recording the output value of each sensing node obtained by individually pressing a plurality of sensing nodes with different weights, and a display device capable of displaying the output value.

According to another aspect of the present disclosure, there is provided a method of calibrating the output value of a pressure pad sensor, according to appended claim 11.

The step of measuring the sensor output value may be performed using the above-described pressure pad sensor pressing device.

The method for calibrating the output value of the pressure pad sensor may further include the step of displaying standard pressure data derived through the step of estimating the standard pressure data.

The step of estimating the standard pressure data may include the step of deriving linear equations for estimating the standard pressure data corresponding to a section between the output values of each sensing node for each time from 1st to nth using a linear interpolation method.

The linear equation may be calculated by the following formula:

$$F_{m-1}(X) = P_{m-1} + \frac{P_m - P_{m-1}}{K_m - K_{m-1}} \times (X - K_{m-1})$$

(When the 1st applied pressure is $P_1$, the 2nd applied pressure is $P_2$ ..., the m-1th applied pressure means $P_{m-1}$, the mth applied pressure means $P_m$, and m = n ≥ 2. When the output value of the sensing node for $P_1$ is $K_1$, the output value of the sensing node for $P_2$ is $K_2$ ..., the output value of the sensing node for $P_{m-1}$ means $K_{m-1}$ and the output value of the sensing node for $P_m$, means $K_m$. $F_{m-1}(X)$: standard pressure data value, X: output value of sensing node)

According to still another aspect of the present disclosure, there may be provided a method for measuring the surface pressure of a battery cell, which is a battery cell surface pressure measurement method for measuring the surface pressure during swelling of battery cells, including the step of arranging a plurality of sensing nodes in horizontal and vertical directions, inserting a pressure pad sensor having an area corresponding to one surface of the battery cell between the battery cells, and stacking them together with the battery cells; and the step of measuring the surface pressure of each region during swelling of the battery cells based on the method for calibrating the output value of the pressure pad sensor described above.

Advantageous Effects

According to the present disclosure, it is possible to determine the output value according to the pressure for each sensing node of the pressure pad sensor using the pressure pad sensor pressing device, and by calibrating the output values for each sensing node identified in this way through the output value calibration method of the pressure pad sensor according to the present disclosure and converting them into standard pressure data, it is possible to solve the problem that the output values are not the same for the same force due to errors in manufacturing each sensing node.

That is, according to the present disclosure, when measuring the swelling pressure distribution of battery cells using a pressure pad sensor, standard pressure data corrected for errors may be used as measured values instead of output values having errors for each sensing node even with the same force. Therefore, it is possible to more accurately and easily measure the surface pressure of each region during swelling of the battery cells using the pressure pad sensor.

Advantageous effects to be obtained by the present disclosure are not limited to the above-described effects, and other effects not mentioned herein may be clearly understood by those skilled in the art from the following description of the present disclosure.

DESCRIPTION OF DRAWINGS

    FIG. 1 is a perspective view of a pressure pad sensor pressing device according to an embodiment of the present disclosure.
    FIG. 2 is a view of the pressure pad sensor pressing device of FIG. 1 viewed from the rear (along the X direction).
    FIG. 3 is a schematic cut-away view of the pressure pad sensor pressing device according to A-A' of FIG. 1.
    FIG. 4 is a schematic cut-away view of the pressure pad sensor pressing device according to B-B' of FIG. 1.
    FIG. 5 is a view of the pressure pad sensor pressing device of FIG. 4 viewed from another angle.
    FIG. 6 is a diagram showing a pressure pad sensor according to an embodiment of the present disclosure.
    FIGS. 7a to 7d are diagrams showing output values for each sensing node obtained by individually pressing each sensing node while changing the pressure P1 to P4 from one to four times according to an embodiment of the present disclosure.
    FIG. 8 is a graph showing an example of applying a linear interpolation method using output values according to pressure changes of one sensing node (C0, R0) according to FIGS. 7a to 7d.
    FIG. 9 is a graph showing the relationship between output values of a plurality of sensing nodes and standard pressure data derived by a calibration method according to an embodiment of the present disclosure.
    FIG. 10 is a view showing that a pressure pad sensor is placed between battery cells and stacked together with the battery cells according to a method for measuring surface pressure of a battery cell according to an embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present invention as claimed, as defined by the appended claims.

A pressure pad sensor pressing device according to the present disclosure described below may be used for pressing each sensing node in a film-type pressure pad sensor having a plurality of sensing nodes. However, it should be noted that the scope of rights of the pressure pad sensor pressing device of the present disclosure is not limited to the use of pressing the pressure pad sensor.

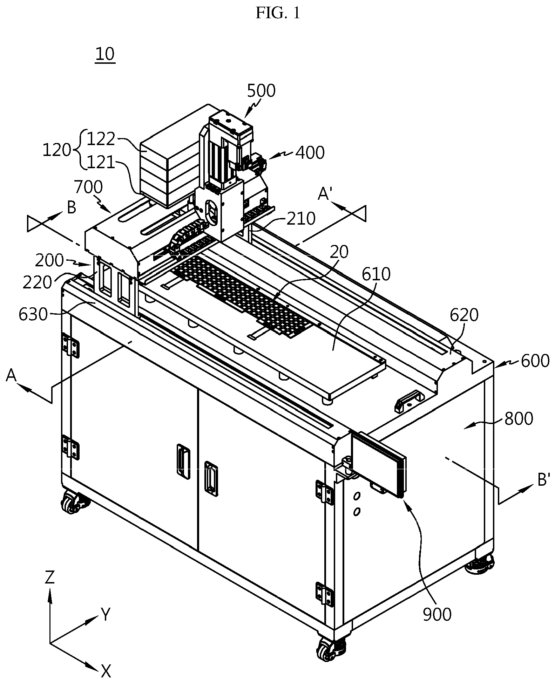

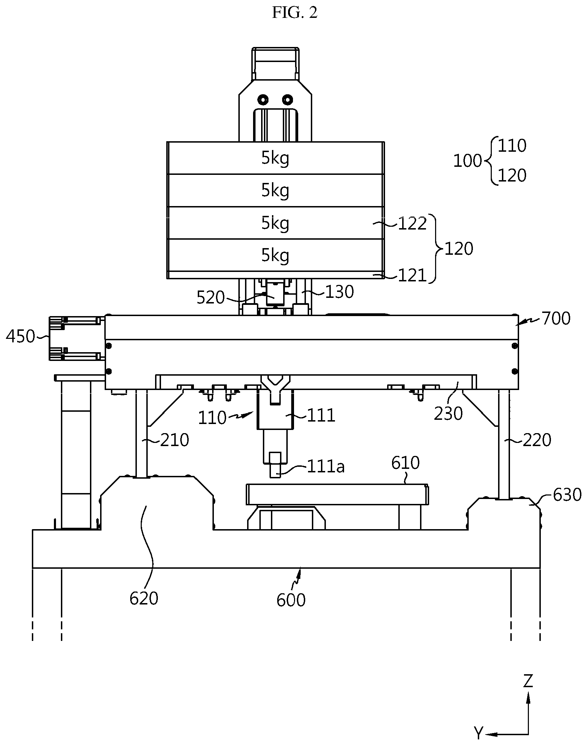

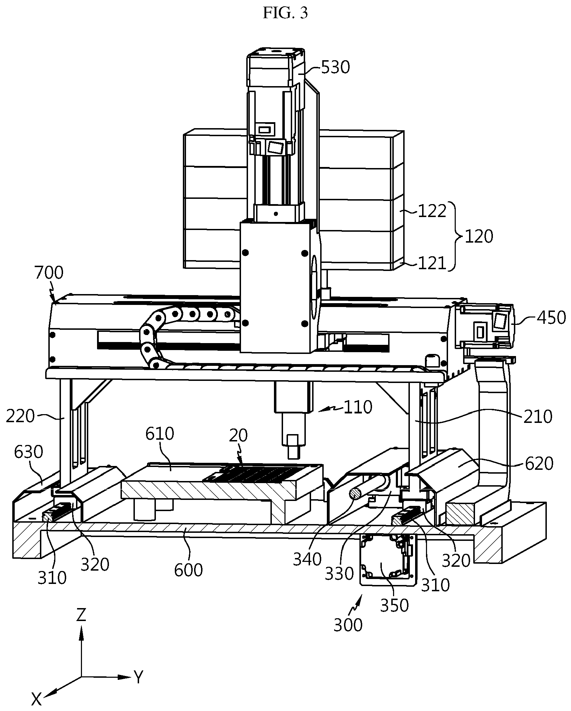

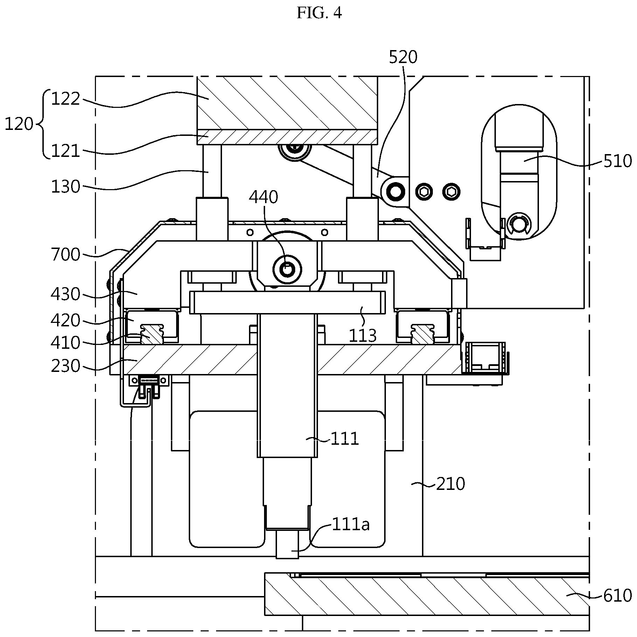

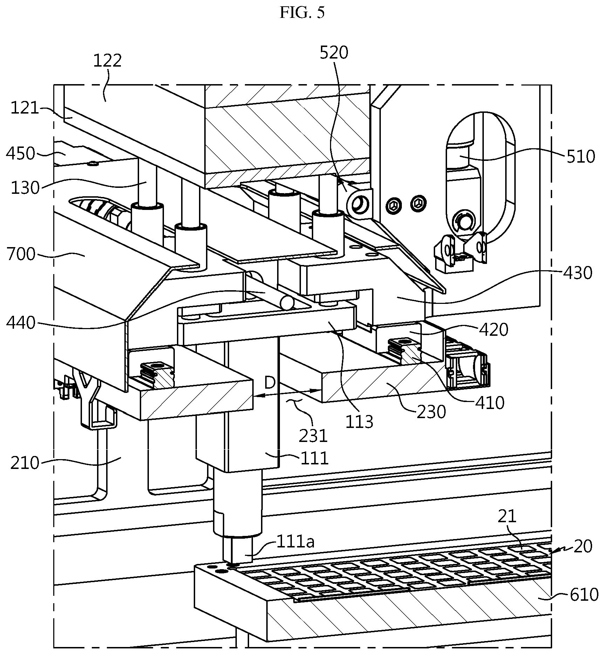

FIG. 1 is a perspective view of a pressure pad sensor pressing device according to an embodiment of the present disclosure, FIG. 2 is a view of the pressure pad sensor pressing device of FIG. 1 viewed from the rear (along the X direction), FIG. 3 is a schematic cut-away view of the pressure pad sensor pressing device according to A-A' of FIG. 1, FIG. 4 is a schematic cut-away view of the pressure pad sensor pressing device according to B-B' of FIG. 1, and FIG. 5 is a view of the pressure pad sensor pressing device of FIG. 4 viewed from another angle.

Referring to these drawings, the pressure pad sensor pressing device 10 according to an embodiment of the present disclosure includes a pressing unit 100, a support frame 200, a first driving unit 300, a second driving unit 400, and a third driving unit 500.

The pressing unit 100 includes a node pressing portion 110 and a weight loading portion 120, and may be configured to apply uniform pressure to all sensing nodes 21 of the pressure pad sensor 20 while moving along the X, Y, and Z axes by the operation of the first driving unit 300, the second driving unit 400, and the third driving unit 500.

The node pressing portion 110 may be provided to be in surface contact with one of the sensing nodes 21 by descending vertically from the upper portion of the pressure pad sensor 20, and the weight loading portion 120 may be provided on the upper portion of the node pressing portion 110 so as to press each sensing node 21 while increasing weight.

In addition, as shown in FIG. 1, the pressure pad sensor pressing device 10 according to this embodiment may further include a base frame 600, a frame cover 700 covering an upper portion of the support frame 200, and a table 800 capable of seating or coupling the base frame 600 thereon.

As shown in FIG. 1, the base frame 600 includes a sensor pedestal 610 on which the pressure pad sensor 20 may be evenly placed and rail covers 620, 630 at both edge regions along the Y direction.

The support frame 200 includes a pair of leg plates 210, 220 that are spaced apart from each other in parallel in the second direction (Y direction) and disposed upright, and a support board 230 extending in the second direction and connected to the upper end of the pair of leg plates 210, 220, and is provided to be movable in the first direction or in the reverse direction (±X direction) on the base frame 600. The pressing unit 100 is installed on the upper portion of the support frame 200.

The first driving unit 300 is connected to the support frame 200 to move the support frame 200 in the first direction or in the reverse direction (±X direction).

As shown in FIG. 3, the first driving unit 300 is located under the rail covers 620, 630 of the base frame 600, and includes a first guide rail 310 extending along the first direction (X direction); a first slide block 320 coupled to the lower portion of the leg plates 210, 220 and slide-movably connected on the first guide rail 310; a shaft connection block 330 coupled to one side of the leg plates 210, 220; a first driving shaft 340 extending in the first direction (X direction) through the shaft connection block 330 and connected to the shaft connection block 330 so that the shaft connection block 330 moves in the first direction or in the reverse direction (±X direction) when rotated in the forward and reverse direction; and a first drive motor 350 for rotating the first driving shaft 340 in the forward and reverse direction. Although not shown for convenience of drawing, the first drive motor 350 may be connected to one end of the first driving shaft 340 by a timing belt.

The first driving shaft 340 and the shaft connection block 330 are relatively rotatably connected by, for example, a ball screw method, and thus the shaft connection block 330 may move in the first direction or in the reverse direction along the first driving shaft 340 when the first driving shaft 340 is rotated in the forward and reverse direction.

As shown in FIG. 3, the shaft connection block 330 is fixedly coupled to one side of one leg plate 210, and thus the support frame 200 together with the shaft connection block 330 may move in the first direction or in the reverse direction.

In addition, the support frame 200 has the pair of leg plates 210, 220 passing through the upper surfaces of the cut rail covers 620, 630 and the lower end thereof fixedly coupled to the first slide block 320, and the first slide block 320 is slide-movably connected on the first guide rail 310, thereby moving smoothly and precisely along the first guide rail 310. The pressing unit 100 is installed on the support board 230 of the support frame 200, so it may move in the first direction or in the reverse direction together with the support frame 200.

Meanwhile, referring to FIGS. 1, 4 and 5, the second driving unit 400 according to an embodiment of the present disclosure includes a second guide rail 410 extending along the second direction (Y direction) on the support board 230; a second slide block 420 slide-movably connected on the second guide rail 410; a shaft connection frame 430 surrounding the connecting rod 130 connected between the node pressing portion 110 and the weight loading portion 120 and coupled on the second slide block 420; a second driving shaft 440 extending in the second direction through the body of the shaft connection frame 430 (in the Y direction) and connected to the shaft connection frame 430 so that the shaft connection frame 430 moves in the second direction or in the reverse direction when rotated in the forward and reverse direction; and a second drive motor 450 for rotating the second driving shaft 440 in the forward and reverse direction.

As shown in FIG. 5, the support board 230 has a long hole 231 provided in the form of being perforated long in the second direction (Y direction). The long hole 231 has a width corresponding to a portion having the largest width in the node pressing portion 110 and may be provided in the form of being perforated long in the second direction. Since this long hole 231 is provided in the support board 230, the node pressing portion 110 of the pressing unit 100 may be vertically disposed from top to bottom of the support board 230, thereby moving in the second direction or in the reverse direction (±Y direction) in this state.

The second guide rail 410 may be provided at both edge regions in the width direction (X direction) of the support board 230 with the long hole 231 interposed therebetween. The second slide block 420 is connected on each of the second guide rails 410, and at least one side of the shaft connection frame 430 is fixedly coupled to the upper portion of the second slide block 420.

As shown in FIG. 5, the shaft connection frame 430 may be provided in a form that it covers the upper portion of the node pressing portion 110, and four connecting rods 130 vertically connecting the node pressing portion 110 and the weight loading portion 120 may pass through the body up and down.

With the above configuration, when the shaft connection frame 430 moves in the ±Y direction along the second guide rail 410 together with the second slide block 420, the pressing unit 100 may also move.

In addition, similar to the first driving unit 300, the second driving shaft 440 is relatively rotatably connected to the shaft connection frame 430 by, for example, a ball screw method, and the second drive motor 450 is connected to one end of the second driving shaft 440.

Therefore, when the second driving shaft 440 is rotated in the forward or reverse direction by controlling the second drive motor 450, the shaft connection frame 430 moves in the second direction or in the reverse direction (±Y direction). At this time, since the pressing unit 100 is connected to the shaft connection frame 430, the pressing unit 100 moves together with the shaft connection frame 430.

According to the configuration of the first driving unit 300 and the second driving unit 400 of this embodiment, by controlling the first drive motor 350 and the second drive motor 450, the pressing unit 100 may be moved in the ±X direction and the ±Y direction so as to be located vertically above the position where the sensing node 21 to be pressed is located. For example, the pressure pad sensor 20 according to the present embodiment includes a plurality of sensing nodes 21 arranged in 5 rows (R0 to R4) and 24 columns (C0 to C23) spaced apart from each other at a predetermined interval, and when pressing the sensing node 21 in the next row or column after pressing any one of the sensing nodes 21, the pressing unit 100 may be precisely moved to a desired location by controlling the first drive motor 350 and/or the second drive motor 450.

Meanwhile, looking in detail with reference to FIGS. 4 and 5 for the main configurations of the pressing unit 100 according to an embodiment of the present disclosure, the pressing unit 100 includes a node pressing portion 110 and a weight loading portion 120, and the node pressing portion 110 and the weight loading portion 120 are configured to be connected by at least one connecting rod 130.

The node pressing portion 110 includes a pressing block 111 and a flange block 113. The pressing block 111 protrudes below the support board 230 passing through the long hole 231 of the support board 230, and the bottom surface may be provided with a size corresponding to the surface area of one sensing node 21. Here, the bottom surface of the pressing block 111 means a place in direct surface contact with the sensing node 21.

The pressing block 111 may be provided integrally as a whole or may be configured in the form in which several portions are assembled. The pressing block 111 of this embodiment belongs to the latter and includes a replaceable contact point block 111a at the lower end. The contact point block 111a is a portion having the bottom surface and may be manufactured in various shapes according to the shape of the sensing node 21 to be pressed. That is, the sensing node 21 of this embodiment is square as shown in FIG. 6, so the bottom surface of the contact point block 111a is also provided in a square corresponding to the area of the sensing node 21 having square shape. Unlike this embodiment, when the sensing node 21 is circular or polygonal, the bottom surface of the contact point block 111a may also be provided in a corresponding shape.

The flange block 113 has a predetermined thickness in the form of a plate body extending horizontally at the top of the pressing block 111, and may be provided to be disposed on the upper portion of the support board 230 and to have a larger width than the long hole 231. Therefore, the pressing block 111 may be lowered under the support board 230 only until the flange block 113 contacts the upper surface of the support board 230.

The weight loading portion 120 includes a tray 121 and a weight 122. The tray 121 may be provided in the form of a shelf or box on which the weight 122 may be placed, and various types of weight 122, for example, 1 kg to 10 kg, may be used.

The node pressing portion 110 and the weight loading portion 120 may be connected by at least one connecting rod 130 and maintained at a predetermined distance vertically. The connecting rod 130 may be provided in the form of a rod being vertically disposed between the flange block 113 and the tray 121 and having a predetermined length. In order to minimize friction with the above-described shaft connection frame 430 when the connecting rod 130 moves up and down, a bearing structure may be applied to a region where the connecting rod 130 passes through the shaft connection frame 430. In addition, a total of four connecting rods 130 are provided at each of the four corners of the flange block 113, and thus it is preferable that the tray 121 is stably positioned on the top of the flange block 113 and the loads of the weights 122 are applied to the flange block 113 without leaning toward either side.

The third driving unit 500 is configured to support the pressing unit 100 as described above and move it up and down.

Referring to FIGS. 1, 4 and 5 again, the third driving unit 500 includes a piston rod 510 extending in the vertical direction; a lever member 520 having one end coupled to the weight loading portion 120 and the other end coupled to the piston rod 510, and provided to perform a seesaw operation by the action of the piston rod 510; and a third drive motor 530 for moving the piston rod 510 in the vertical direction.

The lever member 520 is provided to have one end coupled to the tray 121 and the other end coupled to the piston rod 510, and to perform seesaw operation based on a central fixed axis. When the piston rod 510 is lowered by the operation of the third drive motor 530 and the other end of the lever member 520 goes down, one end of the lever member 520 goes up and the tray 121 of the weight loading portion 120 is also raised in the +Z direction. At this time, as described above, the node pressing portion 110 connected to the weight loading portion 120 by the connecting rod 130 also rises in the +Z direction.

Conversely, when the piston rod 510 goes up and the other end of the lever member 520 is pulled in the +Z direction, one end of the lever member 520 is lowered, and accordingly, the weight loading portion 120 and the node pressing portion 110 also goes down in the -Z direction integrally.

In this way, the pressing unit 100 may be moved in the ±Z direction by the third driving unit 500.

Meanwhile, when a load is applied to each sensing node 21, the pressing block 111 is moved to a position close to the corresponding sensing node 21, and the operation of the first to third drive motors 350, 450, 530 are all stopped. Then, the sensing node 21 may be pressed by the self-load of the pressing unit 100. For example, if the load of the pressing unit 100 without the weight 122 is 5 kgf, adding 5 kg weights 122 to the top of the tray 121 one by one may increase the load of the pressing unit 100 to 10 kgf, 15 kgf, 20 kgf.

When the sensing node 21 is pressed while increasing the load as described above, the resistance value of the sensing node 21 may be output as a digital value each time. Although not shown, in FIG. 1, a (flat flexible) cable may be connected to the connector 22 of the pressure pad sensor 20, and the digital values obtained by pressing each sensing node 21 may be transmitted to the system unit (not shown) through the cable. Here, the system unit may refer to a device composed of a memory for recording the digital values and a microprocessor for performing an operation according to a method for calibrating an output value of the pressure pad sensor 20 to be described later based on the digital values. In addition, the digital value may be displayed on the display device 900 as an output value, for example, ranging from 1 to 255.

According to the pressure pad sensor pressing device 10 according to an embodiment of the present disclosure described above, constant pressure may be uniformly applied to each sensing node 21 of the pressure pad sensor 20, and it is possible to identify how the output value of each sensing node 21 is changed according to the change of the applied pressure.

Hereinafter, a method for calibrating the output value of each sensing node 21 obtained by using the above-described pressure pad sensor pressing device 10 into standard pressure data will be described.

The method for calibrating the output value of the pressure pad sensor 20 according to the present disclosure includes the step of measuring the sensor output value and the step of estimating standard pressure data.

In the step of measuring the sensor output value, the pressure pad sensor 20 is prepared, and the output value of each sensing node 21 from 1st to nth (n is a natural number of 2 or more) obtained by individually pressing each sensing node 21 of the pressure pad sensor 20 while changing the pressure each time from 1st to nth is stored.

The step of measuring the sensor output value may be performed through the pressure pad sensor pressing device 10 according to the present disclosure. Pressure may be uniformly applied to each sensing node 21 by using the pressure pad sensor pressing device 10, so that the output value of each sensing node 21 for a specific pressure may be accurately known. Therefore, it is most preferable to perform the step of measuring the sensor output value using the pressure pad sensor pressing device 10. However, the scope of rights of the method for calibrating the output value of the pressure pad sensor 20 according to the present disclosure is not limited depending on whether to use the pressing device according to the present disclosure or not. That is, the step of measuring the sensor output value may be performed by an alternative means other than the pressing device of the present disclosure.

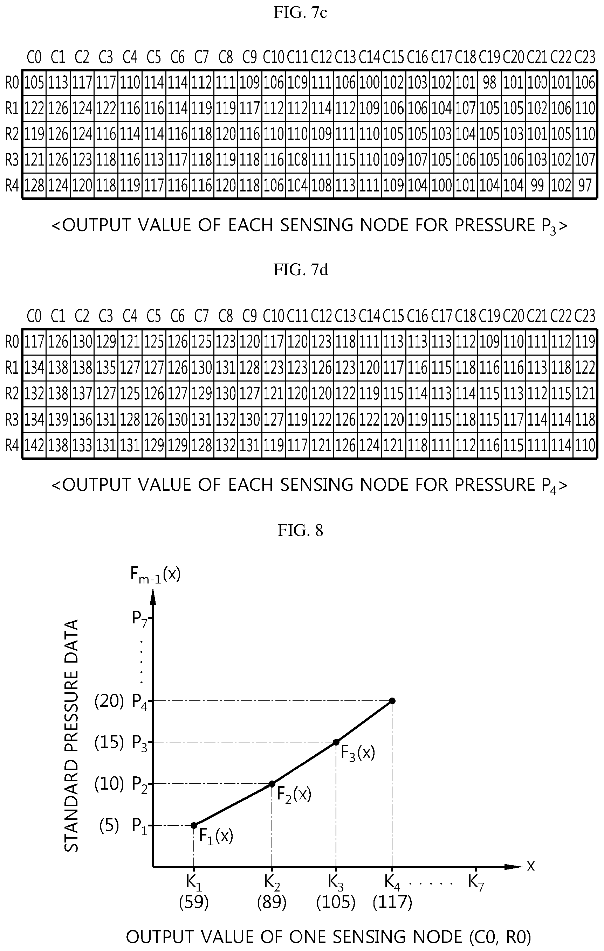

In the case of this embodiment, each sensing node 21 was pressed while changing the pressure to P1, P2, P3, P4 each time from 1st to 4th, (in this embodiment, P1 = 5 kgf, P2 = 10 kgf, P3 = 15 kgf, P4 = 20 kgf) and the results are shown in FIGS. 7a to 7d.

Referring to the output values of each sensing node 21 shown in FIGS. 7a to 7d, it can be seen that the output values are not the same even if the same pressure is applied to each sensing node 21. For example, the output values of the first sensing node (C0, R0) and the 120th sensing node (C23, R4) for the pressure P1 are 89 and 80, respectively, which are not the same.

That is, in the pressure pad sensor 20 having a plurality of sensing nodes 21, the same output value may not be obtained for each sensing node 21 even with the same force as described above. Therefore, if the output value for each region of the pressure pad sensor 20 is used as it is during swelling of the battery cell, a pressure measurement error may occur significantly. Accordingly, the output value for each sensing node 21 needs to be calibrated.

The calibration may be performed through the step of estimating standard pressure data according to the present disclosure as follows.

The step of estimating standard pressure data is a step of estimating standard pressure data according to the output value for each sensing node 21 using two or more different pressures applied to each sensing node 21, the resulting two or more output values and an interpolation method.

Specifically, the step of estimating standard pressure data according to the present embodiment includes a step of deriving linear equations for estimating the standard pressure data corresponding to a section between the output values of each sensing node 21 for each time from 1st to nth using a linear interpolation method.

The linear equation may be calculated by the following formula:

$$F_{m-1}(X) = P_{m-1} + \frac{P_m - P_{m-1}}{K_m - K_{m-1}} \times (X - K_{m-1})$$

(When the 1st applied pressure is $P_1$, the 2nd applied pressure is $P_2$ ..., the m-1th applied pressure means $P_{m-1}$, the mth applied pressure means $P_m$, and m = n $\geq$ 2. When the output value of the sensing node for $P_1$ is $K_1$, the output value of the sensing node for $P_2$ is $K_2$ ..., the output value of the sensing node for $P_{m-1}$ means $K_{m-1}$ and the output value of the sensing node for $P_m$ means $K_m$. $F_{m-1}(X)$: standard pressure data value, X: output value of sensing node)

For example, in the standard pressure data estimation step, a linear equation for each section is derived using predetermined pressure values and output values of a certain sensing node (Cx, Ry) obtained by pressing the certain sensing node (Cx, Ry) with the predetermined pressure values.

If the linear equation is derived as described above, when an unknown arbitrary pressure value is applied to the certain sensing node (Cx, Ry), standard pressure data may be obtained by substituting the unique output value represented by the certain sensing node (Cx, Ry) into the X value of the linear equation. The standard pressure data obtained in this way may be used as a scale representing the intensity of the arbitrary pressure value.

FIG. 8 is a graph showing an example of applying a linear interpolation method using output values according to pressure changes of one sensing node (C0, R0) according to FIGS. 7a to 7d.

More specifically, in FIG. 8, when the linear equation for the section between ($K_1$, $P_1$) and ($K_2$, $P_2$) is $F_1(X)$, the linear equation for the section between ($K_2$, $P_2$) and ($K_3$, $P_3$) is $F_2(X)$, and the linear equation for the section between ($K_3$, $P_3$) and ($K_4$, $P_4$) is $F_3(X)$, the linear equation for each section may be derived as follows:

$$F_1(X) = X/6 - 29/6$$

$$F_2(X) = 5X/16 - 285/16$$

$$F_3(X) = 5X/12 - 345/12$$

If an arbitrary pressure is applied to the sensing node (C0, R0) and the output value at that time is 79, 50/6 Kgf [$F_1(79)$] may be obtained as the standard pressure data value by substituting 79 for X. Accordingly, the intensity of the arbitrary pressure may be displayed as a pressure of 50/6 Kgf instead of an output value of 79 of the sensing node (C0, R0).

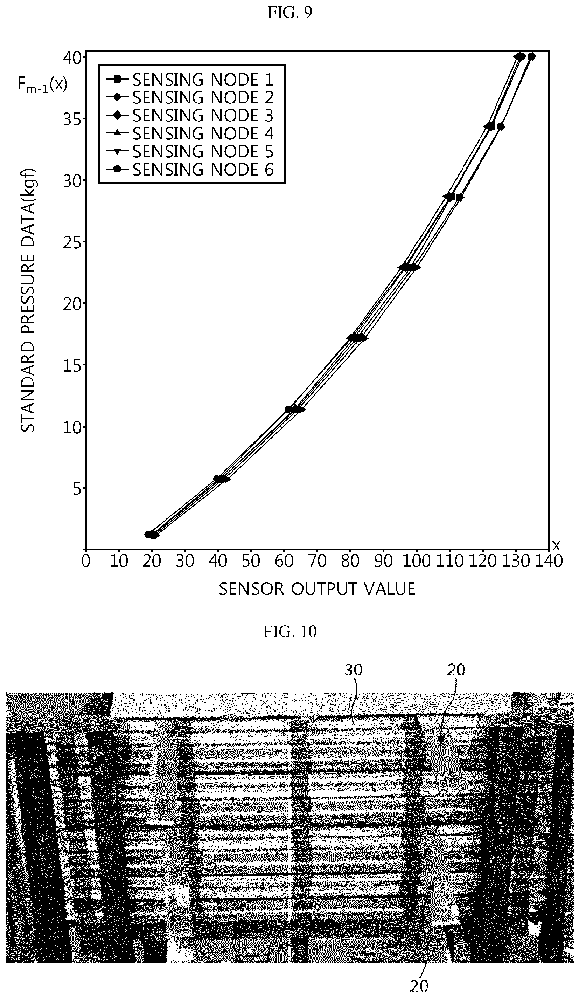

For example, assuming that there is a pressure pad sensor 20 having six sensing nodes 21, according to the present disclosure, the relationship between the output values of the six sensing nodes 21 and the corresponding standard pressure data may be displayed in a graph as shown in FIG. 9.

Referring to FIG. 9, when a certain pressure is equally applied to the six sensing nodes 21, the six sensing nodes may have different output values, but the standard pressure data values respectively corresponding to the different output values are the same.

As in the case of the six sensing nodes, for the 120 sensing nodes 21 of FIG. 6, the relationship between the output values of each sensing node 21 and the corresponding standard pressure data from the first sensing node (C0, R0) to the 120th sensing node (C23, R3) may be displayed in a graph. Also, when arbitrary pressure is applied from the 1st to the 120th sensing node 21, even if the output values from the 1st to the 120th sensing node 21 are different, the standard pressure data is the same as $P_X$.

Therefore, when the output value of each sensing node 21 is converted into standard pressure data and used in the method of calibrating the output value of the pressure pad sensor 20 according to the present disclosure, the problem of the pressure pad sensor 20 (the problem that the output values of the sensing nodes are different even at the same pressure due to manufacturing tolerance, and the like) may be solved.

FIG. 10 is a view showing that the pressure pad sensor 20 is placed between battery cells 30 and stacked together with the battery cells according to a method for measuring surface pressure of a battery cell according to an embodiment of the present disclosure.

Next, a method for measuring surface pressure of a battery cell according to an embodiment of the present disclosure will be described.

The battery cell surface pressure measurement method is a method for measuring the surface pressure of each region during swelling of the battery cell 30, and includes a step of arranging a plurality of sensing nodes 21 in horizontal and vertical directions, inserting the pressure pad sensor 20 having an area corresponding to one surface of the battery cell between the battery cells 30, and stacking them together with the battery cells 30 as shown in FIG. 10.

In this embodiment, the battery cell 30 is a pouch-type battery cell, but the pouch-type battery cell may be replaced with, for example, a rectangular parallelepiped-shaped prismatic battery cell. Also, the pressure pad sensor 20 is a pressure pad sensor 20 having a plurality of sensing nodes 21 as shown in FIG. 6, and a plurality of pressure pad sensors may be used.

In addition, the battery cell surface pressure measurement method according to an embodiment of the present disclosure further includes a step of measuring the surface pressure of each region during swelling of the battery cells 30 based on the above-described method for calibrating the output value of the pressure pad sensor 20 according to the present disclosure.

According to the battery cell surface pressure measurement method, the pressure distribution during swelling may be known through the sensing nodes 21 distributed throughout one surface of the battery cells 30. In addition, since standard pressure data calibrating the output value instead of the output value of each sensing node 21 is displayed as a value representing the intensity of pressure, it is possible to accurately identify the pressure distribution for each region of the battery cell.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

Meanwhile, the terms indicating directions as used herein such as upper, lower, left, right, front, and rear are used for convenience of description only, and it is obvious to those skilled in the art that the terms may change depending on the position of the stated element or an observer.

## Claims

1. A pressure pad sensor pressing device (10), which is a pressing device for individually applying pressure to each sensing node (21) in a pressure pad sensor (20) having a plurality of sensing nodes (21), comprising:

   a pressing unit (100) comprising a node pressing portion (110) provided to descend from a predetermined height and contact one of the sensing nodes (21);
   a support frame (200) supporting the pressing unit (100) at a predetermined height; and
   a first driving unit (300) for moving the pressing unit (100) in the first direction or in the reverse direction ($\pm$X), a second driving unit (400) for moving the pressing unit (100) in the second direction or in the reverse direction ($\pm$Y), and a third driving unit (500) for lifting and lowering the pressing unit (100) with respect to the pressure pad sensor (20);
   **characterized in that** the pressing unit (100) further comprises a weight loading portion (120) provided at the top of the node pressing portion (110) so that a weight load is transmitted to the node pressing portion (110).

2. The pressure pad sensor pressing device (10) according to claim 1,
   wherein the node pressing portion (110) has a bottom surface corresponding to one of the sensing nodes (21).

3. The pressure pad sensor pressing device (10) according to claim 1,

   wherein the support frame (200) comprises a pair of leg plates (210, 220) spaced apart from each other in parallel in the second direction (Y) and disposed upright; and a support board (230) extending in the second direction (Y) and connected to an upper end of the pair of leg plates (210, 220),
   wherein the support board (230) has a long hole (231) configured such that the node pressing portion (110) extends downward from the top of the support board (230) and is movable in the second direction (Y).

4. The pressure pad sensor pressing device (10) according to claim 3,
   wherein the node pressing portion (110) comprises:
   a pressing block (111) extending to the lower portion of the support board (230) through the long hole (231); and a flange block (113) connected to the pressing block (111), having a larger width than the long hole (231) and disposed on top of the support board (230).

5. The pressure pad sensor pressing device (10) according to claim 4,
   wherein the weight loading portion (120) is connected to the flange block (113) being spaced apart at a predetermined interval by at least one connecting rod (130) extending vertically upward from the flange block (113).

6. The pressure pad sensor pressing device (10) according to claim 5,
   wherein the weight loading portion (120) comprises: a tray (121) coupled to an upper end of the connecting rod (130); and one or more weights (122) provided to be seated on the tray (121).

7. The pressure pad sensor pressing device (10) according to claim 3,
   wherein the first driving unit (300) comprises:

   a first guide rail (310) extending along the first direction (X);
   a first slide block (320) coupled to the lower portion of each of the leg plates (210, 220) and slide-movably connected on the first guide rail (310);
   a shaft connection block (330) coupled to one side of the leg plate (210, 220);
   a first driving shaft (340) extending in the first direction (X) through the shaft connection block (330) and connected to the shaft connection block (330) so that the shaft connection block (330) moves in the first direction or in the reverse direction ($\pm$X) when rotated in the forward and reverse direction; and
   a first drive motor (350) for rotating the first driving shaft (340) in the forward and reverse direction.

8. The pressure pad sensor pressing device (10) according to claim 5,
   wherein the second driving unit (400) comprises:

   a second guide rail (410) extending along the second direction (Y) on the support board (230);
   a second slide block (420) slide-movably connected on the second guide rail (410);
   a shaft connection frame (430) surrounding the connecting rod (130) and coupled on the second slide block (420);
   a second driving shaft (440) extending in the second direction (Y) through the shaft connection frame (430) and connected to the shaft connection frame (430) so that the shaft connection frame (430) moves in the second direction or in the reverse direction ($\pm$Y) when rotated in the forward and reverse direction; and

a second drive motor (450) for rotating the second driving shaft (440) in the forward and reverse direction.

9. The pressure pad sensor pressing device (10) according to claim 5,
wherein the third driving unit (500) comprises:

a piston rod (510) extending in the vertical direction;
a lever member (520) having one end coupled to the weight loading portion (120) and the other end coupled to the piston rod (510), and configured to lift and lower the weight loading portion (120) through a seesaw operation by the action of the piston rod (510); and
a third drive motor (530) for moving the piston rod (510) in the vertical direction.

10. The pressure pad sensor pressing device (10) according to claim 1,
which further comprises a system unit for recording the output value of each sensing node (21) obtained by individually pressing a plurality of sensing nodes (21) with different weights, and a display device (900) capable of displaying the output value.

11. A method for calibrating the output value of a pressure pad sensor (20), having a plurality of sensing nodes (21), which is a method for calibrating the output value of the pressure pad sensor (20) with different output values of each sensing node (21) even at the same pressure, comprising:

the step of measuring the sensor output value using the pressure pad sensor pressing device (10) according to claim 1, in which the pressure pad sensor (20) is prepared, and the output value of each sensing node (21) from 1st to nth (n is a natural number of 2 or more) obtained by individually pressing each sensing node (21) of the pressure pad sensor (20) while changing the pressure each time from 1st to nth is stored; and
the step of estimating standard pressure data according to the output value for each sensing node (21) using two or more different pressures applied to each sensing node (21), the resulting two or more output values and an interpolation method.

12. The method for calibrating the output value of the pressure pad sensor (20) according to claim 11,
which further comprises the step of displaying standard pressure data derived through the step of estimating the standard pressure data.

13. The method for calibrating the output value of the pressure pad sensor (20) according to claim 11,
wherein the step of estimating the standard pressure data comprises:
the step of deriving linear equations for estimating the standard pressure data corresponding to a section between the output values of each sensing node (21) for each time from 1st to nth using a linear interpolation method.

14. The method for calibrating the output value of the pressure pad sensor (20) according to claim 13,

wherein the linear equation is calculated by the following formula:

$$F_{m-1}(X) = P_{m-1} + \frac{P_m - P_{m-1}}{K_m - K_{m-1}} \times (X - K_{m-1})$$

(When the 1st applied pressure is $P_1$, the 2nd applied pressure is $P_2$, the m-1th applied pressure means $P_{m-1}$, the mth applied pressure means $P_m$, and $m = n \geq 2$.
When the output value of the sensing node for $P_1$ is $K_1$, the output value of the sensing node for $P_2$ is $K_2$ ..., the output value of the sensing node for $P_{m-1}$ means $K_{m-1}$ and the output value of the sensing node for $P_m$ means $K_m$.
$F_{m-1}(X)$: standard pressure data value, X: output value of sensing node)

**Patentansprüche**

1. Druckvorrichtung (10) für einen Druckpadsensor, die eine Druckvorrichtung zum individuellen Ausüben von Druck auf jeden Sensorknoten (21) in einem Druckpadsensor (20) mit einer Mehrzahl an Sensorknoten (21) ist, umfassend:

eine Druckeinheit (100), umfassend einen Knotendruckabschnitt (110), der bereitgestellt ist, um sich von einer vorgegebenen Höhe abzusenken und mit einem der Sensorknoten (21) in Kontakt zu treten;
einen Stützrahmen (200), der die Druckeinheit (100) auf einer vorgegebenen Höhe stützt; und
eine erste Antriebseinheit (300) zum Bewegen der Druckeinheit (100) in die erste Richtung oder in die entgegengesetzte Richtung (±X), eine zweite Antriebseinheit (400) zum Bewegen der Druckeinheit (100) in die zweite Richtung oder in die entgegengesetzte Richtung (±Y) und eine dritte Antriebseinheit (500) zum Anheben und Absenken der Druckeinheit (100) in Bezug auf den Druckpadsensor (20);
**dadurch gekennzeichnet, dass** die Druckeinheit (100) ferner einen Gewichtsbelastungsabschnitt (120) umfasst, der an der Oberseite des Knotendruckabschnitts (110) bereitgestellt ist, sodass eine Gewichtsbelastung auf den Knotendruckabschnitt (110) übertragen wird.

2. Druckvorrichtung (10) für einen Druckpadsensor nach Anspruch 1, wobei der Knotendruckabschnitt (110) eine untere Fläche aufweist, die einem der Sensorknoten (21) entspricht.

3. Druckvorrichtung (10) für einen Druckpadsensor nach Anspruch 1,

   wobei der Stützrahmen (200) ein Paar Beinplatten (210, 220), die in der zweiten Richtung (Y) parallel zueinander beabstandet sind und senkrecht stehen; und eine Stützplanke (230), die sich in der zweiten Richtung (Y) erstreckt und mit einem oberen Ende des Beinplattenpaars (210, 220) verbunden ist, umfasst,
   wobei die Stützplanke (230) ein langes Loch (231) aufweist, das so eingerichtet ist, dass sich der Knotendruckabschnitt (110) von der Oberseite der Stützplanke (230) nach unten erstreckt und in der zweiten Richtung (Y) beweglich ist.

4. Druckvorrichtung (10) für einen Druckpadsensor nach Anspruch 3, wobei der Knotendruckabschnitt (110) umfasst:
   einen Druckblock (111), der sich durch das lange Loch (231)zum unteren Teil der Stützplanke (230) erstreckt; und einen Flanschblock (113), der mit dem Druckblock (111) verbunden ist, der eine größere Breite als das lange Loch (231) aufweist und auf der Stützplanke (230) angeordnet ist.

5. Druckvorrichtung (10) für einen Druckpadsensor nach Anspruch 4, wobei der Gewichtsbelastungsabschnitt (120) mit dem Flanschblock (113) verbunden ist, der in einem vorbestimmten Abstand durch mindestens eine Verbindungsstange (130) beabstandet ist, die sich vertikal nach oben vom Flanschblock (113) erstreckt.

6. Druckvorrichtung (10) für einen Druckpadsensor nach Anspruch 5, wobei der Gewichtsbelastungsabschnitt (120) umfasst:
   eine mit einem oberen Ende der Verbindungsstange (130) gekoppelten Schale (121); und ein oder mehrere Gewichte (122), die bereitgestellt sind, um auf der Schale (121) platziert zu sein.

7. Druckvorrichtung (10) für einen Druckpadsensor nach Anspruch 3, wobei die erste Antriebseinheit (300) umfasst:

   eine erste Führungsschiene (310), die sich in der ersten Richtung (X) erstreckt;

   einen ersten Gleitblock (320), der mit dem unteren Teil jeder Beinplatte (210, 220) gekoppelt ist und durch Gleiten beweglich mit der ersten Führungsschiene (310) verbunden ist;
   einen Wellenverbindungsblock (330), der mit einer Seite der Beinplatte (210, 220) gekoppelt ist;
   eine erste Antriebswelle (340), die sich in der ersten Richtung (X) durch den Wellenverbindungsblock (330) erstreckt und mit dem Wellenverbindungsblock (330) verbunden ist, so dass sich der Wellenverbindungsblock (330) bei einer Drehung in die Vorwärts- und Rückwärtsrichtung in die erste oder in die entgegengesetzte Richtung ($\pm$X) bewegt; und
   einen ersten Antriebsmotor (350) zum Drehen der ersten Antriebswelle (340) in die Vorwärts- und Rückwärtsrichtung.

8. Druckvorrichtung (10) für einen Druckpadsensor nach Anspruch 5, wobei die zweite Antriebseinheit (400) umfasst:

   eine zweite Führungsschiene (410), die sich in der zweiten Richtung (Y) auf der Stützplanke (230) erstreckt;
   ein zweiter Gleitblock (420), der durch Gleiten beweglich mit der zweiten Führungsschiene (410) verbunden ist;
   einen Wellenverbindungsrahmen (430), der die Verbindungsstange (130) umgibt und an dem zweiten Gleitblock (420) gekoppelt ist;
   eine zweite Antriebswelle (440), die sich in die zweite Richtung (Y) durch den Wellenverbindungsrahmen (430) erstreckt und mit dem Wellenverbindungsrahmen (430) so verbunden ist, dass sich der Wellenverbindungsrahmen (430) bei einer Drehung in der Vorwärts- und Rückwärtsrichtung in die zweite Richtung oder in die entgegengesetzte Richtung ($\pm$Y) bewegt; und
   einen zweiten Antriebsmotor (450) zum Drehen der zweiten Antriebswelle (440) in die Vorwärts- und Rückwärtsrichtung.

9. Druckvorrichtung (10) für einen Druckpadsensor nach Anspruch 5, wobei die dritte Antriebseinheit (500) umfasst:

   eine Kolbenstange (510), die sich in der vertikalen Richtung erstreckt;
   ein Hebelelement (520), dessen eines Ende mit dem Gewichtsbelastungsabschnitt (120) gekoppelt ist und dessen anderes Ende mit der Kolbenstange (510) gekoppelt ist und das dazu eingerichtet ist, den Gewichtsbelastungsabschnitt (120) durch einen Wippenvorgang mittels der Wirkung der Kolbenstange (510) anzuheben und abzusenken; und

einen dritten Antriebsmotor (530) zum Bewegen der Kolbenstange (510) in der vertikalen Richtung.

10. Druckvorrichtung (10) für einen Druckpadsensor nach Anspruch 1, die ferner eine Systemeinheit zur Aufzeichnung des Ausgabewerts jedes Sensorknotens (21), der durch individuelles Drücken einer Mehrzahl von Sensorknoten (21) mit unterschiedlichen Gewichten erhalten ist, und eine Anzeigevorrichtung (900) umfasst, die in der Lage ist, den Ausgabewert anzuzeigen.

11. Verfahren zum Kalibrieren des Ausgabewerts eines Druckpadsensors (20) mit einer Mehrzahl an Sensorknoten (21), das ein Verfahren zum Kalibrieren des Ausgabewerts des Druckpadsensors (20) mit unterschiedlichen Ausgabewerten jedes Messknotens (21) auch bei gleichem Druck ist, umfassend:

den Schritt eines Messens des Sensorausgabewerts unter Verwendung der Druckvorrichtung (10) für einen Druckpadsensor nach Anspruch 1, bei dem der Druckpadsensor vorbereitet wird, und der Ausgabewert jedes Messknotens (21) vom 1. bis zum n-ten (n ist eine natürliche Zahl von 2 oder mehr), der durch individuelles Drücken jedes Messknotens (21) des Druckpadsensors (20) erhalten wird, während der Druck jedes Mal vom 1. bis zum n-ten geändert wird, gespeichert wird; und
den Schritt eines Schätzens von Standarddruckdaten entsprechend dem Ausgabewert für jeden Messknoten (21) unter Verwendung von zwei oder mehr verschiedenen Drücken, die auf jeden Messknoten (21) angewendet werden, den resultierenden zwei oder mehr Ausgabewerten und einer Interpolationsmethode.

12. Verfahren zum Kalibrieren des Ausgabewerts des Druckpadsensors (20) nach Anspruch 11, das ferner den Schritt eines Anzeigens von Standarddruckdaten, die durch den Schritt eines Schätzens der Standarddruckdaten erlangt sind, umfasst.

13. Verfahren zum Kalibrieren des Ausgabewerts des Druckpadsensors (20) nach Anspruch 11, wobei der Schritt eines Schätzens der Standarddruckdaten umfasst:
den Schritt eines Ableitens linearer Gleichungen zum Schätzen der Standarddruckdaten, die einem Abschnitt zwischen den Ausgabewerten jedes Sensorknotens (21) für jeden Zeitpunkt vom 1. bis zum n-ten entsprechen, unter Verwendung einer linearen Interpolationsmethode.

14. Verfahren zum Kalibrieren des Ausgabewerts des Druckpadsensors (20) nach Anspruch 13,

wobei die lineare Gleichung durch die folgende Formel berechnet wird:

$$F_{m-1}(X) = P_{m-1} + \frac{P_m - P_{m-1}}{K_m - K_{m-1}} \times (X - K_{m-1})$$

(wobei der 1. angelegte Druck $P_1$ ist, der 2. angelegte Druck $P_2$ ist, der m-1. angelegte Druck $P_{m-1}$ bedeutet, der m-te angelegte Druck $P_m$ bedeutet und m = n $\geq$ 2.
wobei der Ausgabewert des Sensorknotens für $P_1$ $K_1$ ist, der Ausgabewert des Sensorknotens für $P_2$ $K_2$ ist ..., der Ausgabewert des Sensorknotens für $P_{m-1}$ $K_{m-1}$ bedeutet und der Ausgabewert des Sensorknotens für $P_m$ $K_m$ bedeutet.
$F_{m-1}(X)$: Standarddruckdatenwert, X: Ausgabewert des Sensorknotens)

**Revendications**

1. Dispositif de pressage (10) de capteur de type plaque de pression, qui est un dispositif de pressage destiné à appliquer individuellement une pression à chaque nœud de détection (21) dans un capteur de type plaque de pression (20) présentant une pluralité de nœuds de détection (21), comprenant :

une unité de pressage (100) comprenant une partie de pressage (110) de nœud conçue pour descendre d'une hauteur prédéterminée et entrer en contact avec l'un des nœuds de détection (21) ;
un cadre de support (200) supportant l'unité de pressage (100) à une hauteur prédéterminée ; et
une première unité d'entraînement (300) pour déplacer l'unité de pressage (100) dans la première direction ou dans la direction inverse ($\pm$X), une deuxième unité d'entraînement (400) pour déplacer l'unité de pressage (100) dans la seconde direction ou dans la direction inverse ($\pm$Y) et une troisième unité d'entraînement (500) pour lever et abaisser l'unité de pressage (100) par rapport au capteur de type plaque de pression (20) ;
**caractérisé en ce que** l'unité de pressage (100) comprend en outre une partie de chargement de poids (120) située au sommet de la partie de pressage (110) de nœud, de sorte qu'une charge pondérale soit transmise à la partie de pressage (110) de nœud.

2. Dispositif de pressage (10) de capteur de type plaque de pression selon la revendication 1,
dans lequel la partie de pressage (110) de nœud présente une surface inférieure correspondant à l'un des nœuds de détection (21).

**3.** Dispositif de pressage (10) de capteur de type plaque de pression selon la revendication 1,

dans lequel le cadre de support (200) comprend une paire de plaques formant pied (210, 220) espacées l'une de l'autre parallèlement dans la seconde direction (Y) et disposées verticalement ; et un panneau de support (230) s'étendant dans la seconde direction (Y) et relié à une extrémité supérieure de la paire de plaques formant pied (210, 220),

dans lequel le panneau de support (230) présente un trou oblong (231) configuré de sorte que la partie de pressage (110) de nœud s'étend vers le bas depuis la partie supérieure du panneau de support (230) et est mobile dans la seconde direction (Y).

**4.** Dispositif de pressage (10) de capteur de type plaque de pression selon la revendication 3, dans lequel l'unité de pressage (110) de nœud comprend :

un bloc presseur (111) s'étendant jusqu'à la partie inférieure du panneau de support (230) à travers le trou oblong (231) ; et un bloc à bride (113) relié au bloc presseur (111), présentant une largeur supérieure à celle du trou oblong (231) et disposé sur le dessus du panneau de support (230).

**5.** Dispositif de pressage (10) de capteur de type plaque de pression selon la revendication 4, dans lequel la partie de chargement de poids (120) est raccordée au bloc à bride (113) étant espacée à un intervalle prédéterminé par au moins une tige de liaison (130) s'étendant verticalement vers le haut à partir du bloc à bride (113).

**6.** Dispositif de pressage (10) de capteur de type plaque de pression selon la revendication 5, dans lequel la partie de chargement de poids (120) comprend :

un plateau (121) couplé à une extrémité supérieure de la tige de liaison (130) ; et un ou plusieurs poids (122) conçus pour être placés sur le plateau (121).

**7.** Dispositif de pressage (10) de capteur de type plaque de pression selon la revendication 3, dans lequel la première unité d'entraînement (300) comprend :

un premier rail de guidage (310) s'étendant le long de la première direction (X) ;
un premier bloc coulissant (320) couplé à la partie inférieure de chacune des plaques formant pied (210, 220) et relié de manière coulissante au premier rail de guidage (310) ;

un bloc (330) de liaison d'arbre couplé à un côté de la plaque formant pied (210, 220) ;
un premier arbre d'entraînement (340) s'étendant dans la première direction (X) à travers le bloc (330) de liaison d'arbre et étant relié au bloc (330) de liaison d'arbre afin que le bloc (330) de liaison d'arbre se déplace dans la première direction ou dans la direction inverse (±X) lorsqu'il est tourné dans les sens avant et arrière ; et
un premier moteur d'entraînement (350) pour faire tourner le premier arbre d'entraînement (340) dans les sens avant et arrière.

**8.** Dispositif de pressage (10) de capteur de type plaque de pression selon la revendication 5, dans lequel la deuxième unité d'entraînement (400) comprend :

un second rail de guidage (410) s'étendant dans la seconde direction (Y) sur le panneau de support (230) ;
un second bloc coulissant (420) relié de manière coulissante au second rail de guidage (410) ;
un cadre (430) de liaison d'arbre entourant la tige de liaison (130) et couplé sur le second bloc coulissant (420) ;
un second arbre d'entraînement (440) s'étendant dans la seconde direction (Y) à travers le cadre (430) de liaison d'arbre et relié au cadre (430) de liaison d'arbre afin que le cadre (430) de liaison d'arbre se déplace dans la seconde direction ou dans la direction inverse (±Y) lorsqu'il est tourné dans les sens avant et arrière ; et
un deuxième moteur d'entraînement (450) pour faire tourner le second arbre de traction (440) dans les sens avant et arrière.

**9.** Dispositif de pressage (10) de capteur de type plaque de pression selon la revendication 5, dans lequel la troisième unité d'entraînement (500) comprend :

une tige de piston (510) s'étendant dans la direction verticale ;
un organe levier (520) présentant une extrémité couplée à la partie de chargement de poids (120) et l'autre extrémité couplée à la tige de piston (510), et configuré pour lever et abaisser la partie de chargement de poids (120) par une opération en bascule par l'action de la tige de piston (510) ; et
un troisième moteur d'entraînement (530) pour déplacer la tige de piston (510) dans la direction verticale.

**10.** Dispositif de pressage (10) de capteur de type plaque de pression selon la revendication 1, qui comprend en outre une unité système pour enregistrer la valeur de sortie de chaque nœud de détection (21) obtenue en appuyant individuellement sur une pluralité de nœuds de détection (21) avec des poids différents, et un dispositif d'affichage (900) apte à afficher la valeur de sortie.

11. Procédé d'étalonnage de la valeur de sortie d'un capteur de type plaque de pression (20), présentant une pluralité de nœuds de détection (21), qui est un procédé d'étalonnage de la valeur de sortie du capteur de type plaque de pression (20) avec des valeurs de sortie différentes pour chaque nœud de détection (21), même à la même pression, comprenant :

l'étape de mesure de la valeur de sortie de capteur à l'aide du dispositif de pressage (10) de capteur de type plaque de pression selon la revendication 1, dans laquelle le capteur de type plaque de pression (20) est préparé, et la valeur de sortie de chaque nœud de détection (21) de la 1ère à la nième (n est un nombre naturel supérieur ou égal à 2) obtenue en appuyant individuellement sur chaque nœud de détection (21) du capteur de type plaque de pression (20) tout en modifiant la pression à chaque fois de la 1ère à la nième est stockée ; et

l'étape d'estimation de données de pression standard en fonction de la valeur de sortie pour chaque nœud de détection (21) en utilisant deux pressions différentes ou plus appliquées à chaque nœud de détection (21), les deux valeurs de sortie ou plus résultantes et un procédé d'interpolation.

12. Procédé d'étalonnage de la valeur de sortie du capteur de type plaque de pression (20) selon la revendication 11,

qui comprend en outre l'étape d'affichage des données de pression standard déduites de l'étape d'estimation des données de pression standard.

13. Procédé d'étalonnage de la valeur de sortie du capteur de type plaque de pression (20) selon la revendication 11,

dans lequel l'étape d'estimation des données de pression standard comprend :

l'étape de déduction d'équations linéaires pour estimer les données de pression standard correspondant à une section entre les valeurs de sortie de chaque nœud de détection (21) à chaque fois de la 1ère à la nième à l'aide d'un procédé d'interpolation linéaire.

14. Procédé d'étalonnage de la valeur de sortie du capteur de type plaque de pression (20) selon la revendication 13,

dans lequel l'équation linéaire est calculée par la formule suivante :

$$F_{m-1}(X) = P_{m-1} + \frac{P_m - P_{m-1}}{K_m - K_{m-1}} \times (X - K_{m-1})$$

(Lorsque la 1ère pression appliquée est $P_1$, la 2ème pression appliquée est $P_2$, la m-1ème pression appliquée signifie $P_{m-1}$, la m-ième pression appliquée correspond à $P_m$, et m = n $\geq$ 2.

Lorsque la valeur de sortie du nœud de détection pour $P_1$ est $K_1$, la valeur de sortie du nœud de détection pour $P_2$ est $K_2$, ..., la valeur de sortie du nœud de détection pour $P_{m-1}$ correspond à $K_{m-1}$ et la valeur de sortie du nœud de détection pour $P_m$ correspond à $K_m$.

$F_{m-1}(X)$ : valeur de données de pression standard, X : valeur de sortie du nœud de détection)

FIG. 1

FIG. 2

FIG. 3

FIG. 4

FIG. 5

FIG. 6

FIG. 7a

| | C0 | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 |
|---|---|---|---|---|---|---|---|---|---|---|---|---|---|---|---|---|---|---|---|---|---|---|---|---|
| R0 | 59 | 64 | 69 | 68 | 64 | 67 | 66 | 65 | 65 | 64 | 61 | 62 | 64 | 62 | 55 | 59 | 59 | 59 | 56 | 56 | 56 | 57 | 53 | 57 |
| R1 | 66 | 72 | 70 | 70 | 64 | 65 | 63 | 67 | 68 | 68 | 65 | 62 | 66 | 63 | 62 | 61 | 62 | 58 | 61 | 59 | 58 | 56 | 59 | 60 |
| R2 | 69 | 70 | 72 | 66 | 65 | 65 | 68 | 67 | 69 | 68 | 63 | 64 | 61 | 63 | 64 | 60 | 60 | 59 | 60 | 61 | 59 | 57 | 58 | 62 |
| R3 | 68 | 71 | 72 | 68 | 67 | 66 | 70 | 72 | 69 | 70 | 68 | 62 | 65 | 70 | 62 | 63 | 63 | 61 | 61 | 61 | 60 | 58 | 56 | 59 |
| R4 | 71 | 71 | 69 | 65 | 68 | 68 | 68 | 68 | 70 | 67 | 58 | 54 | 63 | 65 | 66 | 67 | 60 | 58 | 57 | 62 | 60 | 57 | 61 | 54 |

<OUTPUT VALUE OF EACH SENSING NODE FOR PRESSURE $P_1$>

FIG. 7b

| | C0 | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 |
|---|---|---|---|---|---|---|---|---|---|---|---|---|---|---|---|---|---|---|---|---|---|---|---|---|
| R0 | 89 | 95 | 101 | 100 | 95 | 97 | 98 | 96 | 94 | 93 | 90 | 93 | 94 | 91 | 83 | 86 | 86 | 85 | 84 | 82 | 83 | 83 | 81 | 86 |
| R1 | 100 | 108 | 106 | 104 | 98 | 98 | 96 | 100 | 102 | 101 | 95 | 94 | 98 | 94 | 93 | 90 | 91 | 88 | 91 | 88 | 88 | 86 | 89 | 91 |
| R2 | 100 | 107 | 106 | 99 | 97 | 96 | 100 | 101 | 102 | 99 | 94 | 94 | 93 | 95 | 94 | 89 | 90 | 87 | 89 | 89 | 88 | 84 | 87 | 92 |
| R3 | 101 | 106 | 104 | 100 | 99 | 97 | 102 | 102 | 102 | 101 | 99 | 92 | 95 | 98 | 92 | 92 | 91 | 89 | 90 | 89 | 90 | 86 | 86 | 89 |
| R4 | 108 | 105 | 104 | 101 | 102 | 100 | 100 | 101 | 104 | 100 | 88 | 88 | 92 | 96 | 95 | 94 | 88 | 86 | 85 | 90 | 88 | 85 | 86 | 80 |

<OUTPUT VALUE OF EACH SENSING NODE FOR PRESSURE $P_2$>

FIG. 7c

| | C0 | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 |
|---|---|---|---|---|---|---|---|---|---|---|---|---|---|---|---|---|---|---|---|---|---|---|---|---|
| R0 | 105 | 113 | 117 | 117 | 110 | 114 | 114 | 112 | 111 | 109 | 106 | 109 | 111 | 106 | 100 | 102 | 103 | 102 | 101 | 98 | 101 | 100 | 101 | 106 |
| R1 | 122 | 126 | 124 | 122 | 116 | 116 | 114 | 119 | 119 | 117 | 112 | 112 | 114 | 112 | 109 | 106 | 106 | 104 | 107 | 105 | 105 | 102 | 106 | 110 |
| R2 | 119 | 126 | 124 | 116 | 114 | 114 | 116 | 118 | 120 | 116 | 110 | 110 | 109 | 111 | 110 | 105 | 105 | 103 | 104 | 105 | 103 | 101 | 105 | 110 |
| R3 | 121 | 126 | 123 | 118 | 116 | 113 | 117 | 118 | 119 | 118 | 116 | 108 | 111 | 115 | 110 | 109 | 107 | 105 | 106 | 105 | 106 | 103 | 102 | 107 |
| R4 | 128 | 124 | 120 | 118 | 119 | 117 | 116 | 116 | 120 | 118 | 106 | 104 | 108 | 113 | 111 | 109 | 104 | 100 | 101 | 104 | 104 | 99 | 102 | 97 |

<OUTPUT VALUE OF EACH SENSING NODE FOR PRESSURE $P_3$>

FIG. 7d

| | C0 | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 |
|---|---|---|---|---|---|---|---|---|---|---|---|---|---|---|---|---|---|---|---|---|---|---|---|---|
| R0 | 117 | 126 | 130 | 129 | 121 | 125 | 126 | 125 | 123 | 120 | 117 | 120 | 123 | 118 | 111 | 113 | 113 | 113 | 112 | 109 | 110 | 111 | 112 | 119 |
| R1 | 134 | 138 | 138 | 135 | 127 | 127 | 126 | 130 | 131 | 128 | 123 | 123 | 126 | 123 | 120 | 117 | 116 | 115 | 118 | 116 | 116 | 113 | 118 | 122 |
| R2 | 132 | 138 | 137 | 127 | 125 | 126 | 127 | 129 | 130 | 127 | 121 | 120 | 120 | 122 | 119 | 115 | 114 | 113 | 114 | 115 | 113 | 112 | 115 | 121 |
| R3 | 134 | 139 | 136 | 131 | 128 | 126 | 130 | 131 | 132 | 130 | 127 | 119 | 122 | 126 | 122 | 120 | 119 | 115 | 118 | 115 | 117 | 114 | 114 | 118 |
| R4 | 142 | 138 | 133 | 131 | 131 | 129 | 129 | 128 | 132 | 131 | 119 | 117 | 121 | 126 | 124 | 121 | 118 | 111 | 112 | 116 | 115 | 111 | 114 | 110 |

<OUTPUT VALUE OF EACH SENSING NODE FOR PRESSURE $P_4$>

FIG. 8

OUTPUT VALUE OF ONE SENSING NODE (C0, R0)

FIG. 9

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210183108
- KR 1020210055363 A

- CN 101281073 A